# EUROPÄISCHE PATENTSCHRIFT

(11) **EP 1 088 721 B1**
(45) Veröffentlichungstag und Bekanntmachung des Hinweises auf die Patenterteilung: **02.11.2005**
(21) Anmeldenummer: 00117694.0
(22) Anmeldetag: 17.08.2000
(51) Int. Cl.: B60S 1/50, F04D 29/70

(54) **Zur Montage strömungsseitig vor einer Pumpe einer Scheibenreinigungsanlage eines Kraftfahzeuges vorgesehener Filter**
Filter to be mounted upstream of a pump of a vehicle window cleaning unit
Filtre pour montage en amont d'une pompe d'une unité de lavage de vitres de véhicule

(30) Priorität: 29.09.1999 DE 19946552
(43) Veröffentlichungstag der Anmeldung: 04.04.2001
(73) Patentinhaber: SIEMENS AKTIENGESELLSCHAFT, 80333 München (DE)
(72) Erfinder: Goldbach, Matthias, 36179 Bebra (DE); Hoffmann, Bernd, 36251 Bad Hersfeld (DE)

(56) Entgegenhaltungen:
- EP-A- 0 484 910
- EP-A- 0 510 994
- WO-A-94/21350
- DE-A- 2 512 781
- DE-A- 3 537 794
- DE-A- 3 603 946
- DE-A- 3 709 926
- DE-A- 19 744 361
- US-A- 3 783 888
- US-A- 3 850 813
- US-A- 4 118 323
- US-A- 4 420 396
- US-A- 5 545 318
- US-A- 5 736 045

## Beschreibung

Die Erfindung betrifft einen zur Montage strömungsseitig vor einer Pumpe einer Scheibenreinigungsanlage eines Kraftfahrzeuges vorgesehenen Filter mit einem Haltebereich zur Befestigung an einem angrenzenden Bauteil, mit einem Dichtbereich zur Abdichtung gegenüber dem angrenzenden Bauteil und mit einem siebartige Ausnehmungen aufweisenden Filterbereich zum Filtern von Scheibenreinigungsflüssigkeit.

Solche Filter werden in heutigen Scheibenreinigungsanlagen meist unmittelbar auf einen Ansaugstutzen der Pumpe aufgesteckt und zwischen der Pumpe und einem Vorratsbehälter für Scheibenreinigungsflüssigkeit eingespannt und sind aus der Praxis bekannt. Der Haltebereich ist dabei flanschförmig zwischen dem Vorratsbehälter und der Pumpe angeordnet, während der Dichtbereich den Filter gegenüber dem Ansaugstutzen und dem Vorratsbehälter abdichtet. Der Filterbereich weist hierbei eine Vielzahl von Ausnehmun-gen als Durchlaß für die Scheibenreinigungsflüssigkeit auf. Der Filter wird im Spritzgußverfahren aus dem gummielastischen Material EPDM gefertigt. Die Vorrichtung zur Fertigung des Filters hat mehrere eine Hohlform des Filters bildende Formteile, von denen zumindest eines Stifte zur Erzeugung der Ausnehmungen des Filterbereichs trägt. Die Stifte werden bei der Fertigung des Filters gegen ein gegenüberliegendes Formteil vorgespannt. Anschließend wird Kunststoff in die Hohlform eingebracht.

Nachteilig bei dem bekannten Filter ist, daß er für eine hohe Stabilität sehr dickwandig gestaltet sein muß. Dies erfordert jedoch sehr lange Stifte. Eine hohe Stabilität ist erforderlich, um zu Verhindern, daß der Filterbereich im Betrieb der Scheibenreinigungsanlage angesaugt wird. Zur Aufnahme der bei dem Vorspannen der Stifte gegen das gegenüberliegende Bauteil auftretenden mechanischen Belastungen benötigen die Stifte einen großen Durchmesser. Dies führt zu sehr großen Abmessungen in dem Filterbereich und damit zu einer geringen Filterwirkung. Durch die geringe Filterwirkung des Filters können Waschdüsen der Scheibenreinigungsanlage verstopft werden.

Das Dokument DE-A-19744361 offenbart einen Filter mit einem Halte- und einem Dichtbereich zur Abdichtung gegenüber einem angrenzenden Bauteil und mit einem Filterbereich, der von den auf jeder Seite des Filterbereichs angeordneten Rippen ausgebildet ist, wobei die Rippen unter einem Winkel zueinander verdreht ausgerichtet und in Kreuzungspunkten miteinander verbunden sind.

Des Weiteren offenbart das Dokument DE-A-3709926 einen Filter, der aus einer aus gummielastischem Material gefertigten Einheit aus Halte- und Dichtbereich besteht wobei ein Einlegeteil einen Filterbereich aufweist und mittels einer Ausbuchtung mit der Einheit aus dem Halte- und Dichtbereich formschlüssig verbunden ist. Die Verbindung erfordert hohe Montagekräfte und dadurch einen dickwandigen Einlegeteil mit kleinem Filterbereich.

Der Erfindung liegt das Problem zugrunde, einen Filter der eingangs genannten Art so zu gestalten, daß er eine hohe Stabilität aufweist und eine hohe Filterleistung ermöglicht.

Dieses Problem wird erfindungsgemäß durch die Merkmale des kennzeichnenden Teils des Anspruchs 1 gelöst.

Durch die Gestaltung des im DE-A-19744361 offenbarten Filters ist der Filterbereich gitterartig aufgebaut, wobei sich die Rippen jeweils nur über die halbe Wandstärke des Filterbereichs erstrecken. Durch die Anordnung der Rippen lassen sich die Ausnehmungen besonders klein gestalten. Der Filter hat hierdurch eine besonders hohe Filterleistung. Stifte zur Erzeugung der Ausnehmungen sind dank der Erfindung nicht erforderlich. Durch eine geeignete Wahl der Winkel der auf gegenüberliegenden Seiten angeordneten Rippen zueinander und der Abmessungen läßt sich der Filterbereich einfach mit einer vorgesehenen hohen Stabilität gestalten.

Bei der Fertigung des Kunststoffteils im Spritzgußverfahren können Formteile des Werkzeugs Stege aufweisen, die die Rippen seitlich begrenzen. Anschließend lassen sich die Formteile gegeneinander vorspannen, so daß an Berührungspunkten die Ausnehmungen des Filterbereichs entstehen. Da die hierbei die Stege des Werkzeugs bei derselben Wandstärke des Filterbereichs nur die halbe Höhe der Stifte des bekannten Werkzeugs aufweisen müssen, haben sie auch bei sehr kleinen Abmessungen eine sehr hohe Stabilität. Die Berührungspunkte der Rippen können für eine hohe Filterleistung des Filterbereichs sehr kleine Abmessungen aufweisen.

Der erfindungsgemäße Filter hat eine besonders hohe Stabilität, wenn der Filterbereich auf einem topfförmig gestalteten, aus Polypropylen gefertigten Kunststoffteil angeordnet ist.

Zur weiteren Erhöhung der Stabilität des erfindungsgemäßen Filters trägt es bei, wenn die Rippen des topfförmig gestalteten Filterbereichs auf der Innenseite längs der Mantelfläche und die Rippen auf der Außenseite um die Mantelfläche umlaufend angeordnet sind.

Zur Erhöhung der Stabilität des Filterbereichs trägt es gemäß einer anderen vorteilhaften Weiterbildung der Erfindung bei, wenn das den Filterbereich aufweisende Kunststoffteil Versteifungsrippen und/oder Versteifungsringe mit im Verhältnis zu den die Ausnehmungen begrenzenden Rippen großen Abmessungen hat. Hierdurch können die Rippen sehr kleine Abmessungen aufweisen.

Die Erfindung läßt zahlreiche Ausführungsformen zu. Zur weiteren Verdeutlichung ihres Grundprinzips sind zwei davon in der Zeichnung dargestellt und werden nachfolgend beschrieben. Diese zeigt in
- Fig.1: einen erfindungsgemäßen, an einer Pumpe montierten Filter in einem Vorratsbehälter einer Scheibenreinigungsanlage,
- Fig.2: den Filter aus Figur 1 in einer stark vergrößerten Darstellung,
- Fig.3: einen Längsschnitt durch den Filter aus Figur 1,
- Fig.4: eine weitere Ausführungsform des erfindungsgemäßen Filters im Längsschnitt.

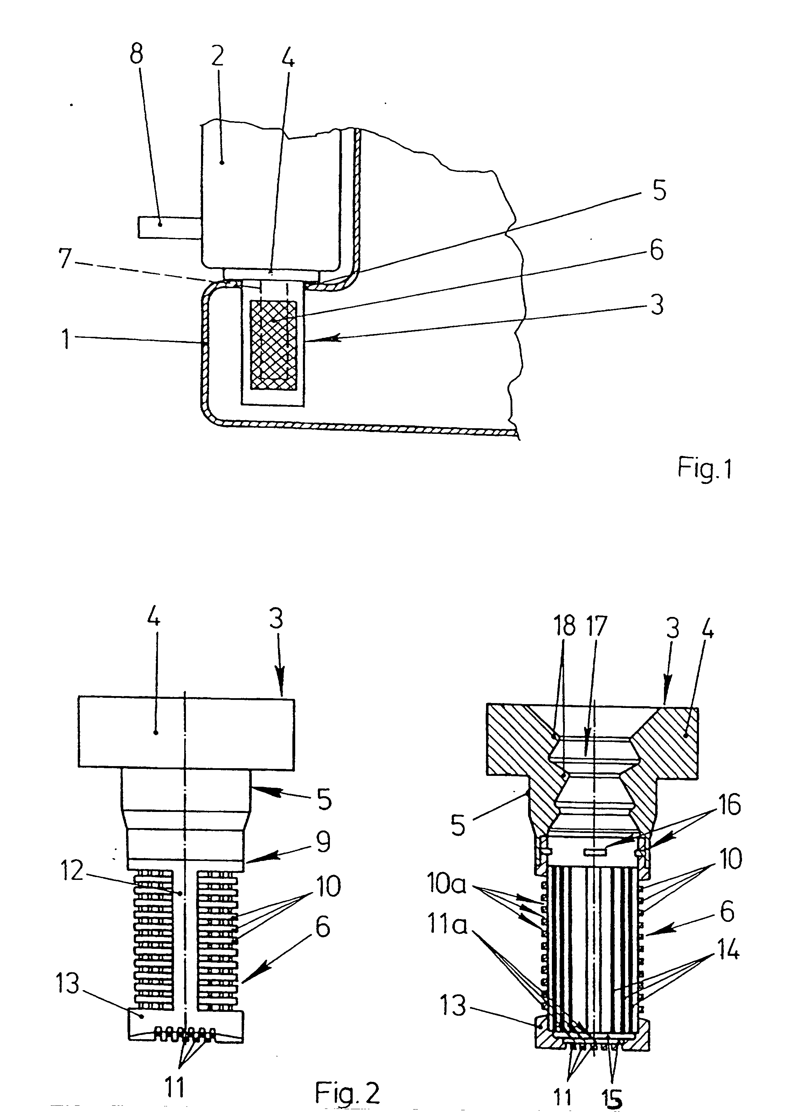

Figur 1 zeigt einen Teilbereich eines Vorratsbehälters 1 für eine Scheibenreinigungsanlage eines Kraftfahrzeuges mit einer Pumpe 2 und einem Filter 3. Zur Verdeutlichung ist der Vorratsbehälter 1 geschnitten dargestellt. Der Filter 3 weist einen flanschförmigen Haltebereich 4 auf, mit welchem er zwischen einer Wandung des Vorratsbehälters 1 und der Pumpe 2 eingespannt ist. In den an dem Vorratsbehälter 1 und der Pumpe 2 anliegenden Bereichen hat der Filter 3 jeweils einen Dichtbereich 5. Weiterhin hat der Filter 3 einen Filterbereich 6, durch den Scheibenreinigungsflüssigkeit hindurchtreten kann. In den Filter 3 ragt ein Ansaugstutzen 7 der Pumpe 2 hinein. Die Pumpe 2 fördert Scheibenreinigungsflüssigkeit aus dem Vorratsbehälter 1 durch den Filterbereich 6 des Filters 3 zu einem Anschlußstutzen 8. Auf den Anschlußstutzen 8 läßt sich eine nicht dargestellte zu Waschdüsen der Scheibenreinigungsanlage führende Leitung aufstecken.

Figur 2 zeigt den Filter 3 aus Figur 1 in einer stark vergrößerten Darstellung. Der Filterbereich 6 ist auf einem mit dem Haltebereich 4 verbundenen topfförmig gestalteten Kunststoffteil 9 angeordnet. Der Haltebereich 4 ist aus einem gummielastischen Material gefertigt, während das Kunststoffteil 9 beispielsweise aus Polypropylen besteht. Der Filterbereich 6 hat an der Außenseite seiner Mantelfläche eine Vielzahl von radial angeordneten Rippen 10. An der Stirnseite des Kunststoffteils 9 sind ebenfalls Rippen 11 des Filterbereichs 6 angeordnet. Weiterhin hat das Kunststoffteil 9 eine Versteifungsrippe 12 und einen Versteifungsring 13.

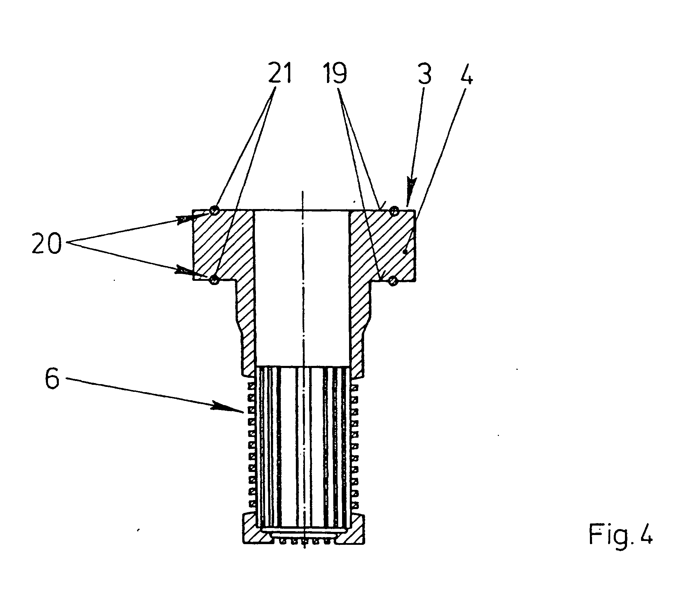

Figur 3 zeigt in einem Längsschnitt durch den Filter 3 aus Figur 2, daß der Filterbereich 6 an der Innenseite seiner Mantelfläche längs angeordnete Rippen 14 aufweist, die mit den radial angeordneten Rippen 10 der Außenseite verbunden sind. An der Innenseite der Stirnseite sind ebenfalls Rippen 15 angeordnet, die um 90° gegenüber den Rippen 11 der Außenseite verdreht ausgerichtet sind. In den Kreuzungspunkten sind die Rippen 10, 14; 11, 15 einander gegenüberliegender Seiten miteinander verbunden. Der Filterbereich 6 ist hierdurch gitterartig aufgebaut. Die Rippen 10, 14; 11, 15 begrenzen Ausnehmungen 10a, 11a des Filterbereichs 6. Weiterhin zeigt Figur 3, daß das Kunststoffteil 9 Ausnehmungen 16 zur formschlüssigen Verbindung mit dem Haltebereich 4 hat. Der zur Abdichtung des Filters 3 gegenüber dem im Figur 1 dargestellten Ansaugstutzen 7 vorgesehene Dichtbereich 17 hat mehrere einteilig mit dem Haltebereich 4 gefertigte Dichtrippen 18.

Figur 4 zeigt eine weitere Ausführungsform des Filters 3, bei dem der Filterbereich 6 einteilig mit dem Haltebereich 4 gefertigt ist. Auf dem Haltebereich 5 sind zur Bildung eines Dichtbereichs 19 Ausnehmungen 20 für Dichtringe 21 angeordnet. Der dem Ansaugstutzen 7 der Pumpe 2 aus Figur 1 gegenüberstehende Abschnitt des Haltebereichs 4 ist zylindrisch gestaltet. Zur Abdichtung kann beispielsweise der in Figur 1 dargestellte Ansaugstutzen 7 einen Dichtring aufweisen.

## Patentansprüche

1. Filter (3) mit einem Haltebereich (4) zur Befestigung an einem angrenzenden Bauteil, mit einem Dichtbereich (5) zur Abdichtung gegenüber dem angrenzenden Bauteil und mit einem siebartige Ausnehmungen (10a, 11a) aufweisenden Filterbereich (6), wobei die Ausnehmungen (10a, 11a) von auf jeder Seite des Filterbereichs (6) angeordneten Rippen (10, 14; 11, 15) begrenzt sind und wobei die auf einander gegenüberliegenden Seiten angeordneten Rippen (10, 14; 11, 15) um einen vorgesehenen Winkel zueinander verdreht ausgerichtet und in Kreuzungspunkten miteinander verbunden sind, **dadurch gekennzeichnet , dass** das den Filterbereich (6) aufweisende Kunststoffteil (9) Ausnehmungen (16) zur formschlüssigen Verbindung mit einer aus gummielastischem Material gefertigten Einheit aus Haltebereich (4) und Dichtbereich (5) hat und dass sich die Rippen (10, 14; 11, 15) zu ihrem freien Ende hin zu einem schmalen Bereich verjüngen und dass der Filter (3) zur Montage strömungsseitig vor einer Pumpe (2) einer Scheibenreinigungsanlage eines Kraftfahrzeuges vorgesehen und der Filterbereich (6) zum Filtern von Scheibenreinigungsflüssigkeit ausgebildet ist.

2. Filter nach Anspruch 1, **dadurch gekennzeichnet, daß** der Filterbereich (6) auf einem topfförmig gestalteten, aus Polypropylen gefertigten Kunststoffteil (9) angeordnet ist.

3. Filter nach Anspruch 1 oder 2, **dadurch gekennzeichnet, daß** die Rippen (14) des topfförmig gestalteten Filterbereichs (6) auf der Innenseite längs der Mantelfläche und die Rippen (10) auf der Außenseite um die Mantelfläche umlaufend angeordnet sind.

4. Filter nach zumindest einem der vorhergehenden Ansprüche, **dadurch gekennzeichnet, daß** das den Filterbereich (6) aufweisende Kunststoffteil (9) Versteifungsrippen (12) und/oder Versteifungsringe (13) mit im Verhältnis zu den die Ausnehmungen (10a, 11a) begrenzenden Rippen (10, 14; 11, 15) großen Abmessungen hat.

## Claims

1. Filter (3) comprising a holding region (4) for attachment to an adjacent structural part, comprising a sealing region (5) for sealing against the adjacent structural part, and comprising a filter region (6) having screen-like recesses (10a, 11a), the recesses (10a, 11a) being delimited by ribs (10, 14; 11, 15) disposed on each side of the filter region (6) and the ribs (10, 14; 11, 15) disposed on mutually opposite sides being aligned such that they are twisted by a designated angle relative to one another and are connected to one another at points of intersection, **characterized in that** the plastics part (9) having the filter region (6) has recesses (16) for positive connection to a unit comprising holding region (4) and sealing region (5), which unit is made of elastomeric material, and **in that** the ribs (10, 14; 11, 15) taper in the direction of their free end to a narrow region, and **in that** the filter (3) is intended for fitting upstream of a pump (2) of a motor-vehicle window cleaning unit and the filter region (6) is configured for the filtering of window cleaning fluid.

2. Filter according to Claim 1, **characterized in that** the filter region (6) is disposed on a pot-shaped plastics part (9) made of polypropylene.

3. Filter according to Claim 1 or 2, **characterized in that** the ribs (14) of the pot-shaped filter region (6) on the inner side are disposed along the length of the shell surface and the ribs (10) on the outer side are disposed encircling the shell surface.

4. Filter according to at least one of the preceding claims, **characterized in that** the plastics part (9) having the filter region (6) has stiffening ribs (12) and/or stiffening rings (13) of large dimensions in relation to the ribs (10, 14; 11, 15) delimiting the recesses (10a, 11a).

## Revendications

1. Filtre (3) comportant une partie fixation (4), permettant de le fixer sur une pièce voisine, une partie étanchéité (5), permettant d'assurer son étanchéité par rapport à la pièce voisine, et une partie filtre (6), comportant des évidements (10a, 11a) en genre de tamis, où les évidements (10a, 11a) sont délimités par des nervures (10, 14; 11, 15) disposées de chaque côté de la partie filtre (6) et où les nervures (10, 14; 11, 15) disposées sur des côtés se faisant face sont orientées décalées l'une par rapport à l'autre d'un angle prévu et sont liées les unes aux autres aux points de croisement, **caractérisé par le fait que** la pièce en matière plastique (9) comportant la partie filtre (6) a des évidements (16) formant une liaison par assemblage géométrique avec une unité composée de la partie fixation (4) et de la partie étanchéité (5) et fabriquée en matière première élastique à base de caoutchouc, et que les nervures (10, 14; 11, 15) deviennent de plus en plus fines vers leur extrémité libre et que le filtre (3) est prévu pour être monté, dans le sens de l'écoulement, en amont d'une pompe (2) d'un système de nettoyage des glaces d'un véhicule automobile et que la partie filtre (6) est conçue pour filtrer du liquide de nettoyage des glaces.

2. Filtre selon la revendication 1 **caractérisé par le fait que** la partie filtre (6) est disposée sur une pièce en matière plastique (9) en forme de pot fabriquée en polypropylène.

3. Filtre selon la revendication 1 ou 2 **caractérisé par le fait que** les nervures (14) de la partie filtre (6) en forme de pot sont disposées sur la face intérieure dans le sens de la longueur de la surface périphérique et les nervures (10), sur la face extérieure autour de la surface périphérique.

4. Filtre selon au moins l'une des revendications précédentes **caractérisé par le fait que** la pièce en matière plastique (9) comportant la partie filtre (6) a des nervures de renforcement (12) et / ou des bagues de renforcement (13) ayant de grandes dimensions par rapport aux nervures (10, 14; 11, 15) limitant les évidements (10a, 11a).
